# DEMANDE DE BREVET EUROPEEN

(11) **EP 4 786 338 A1**
(43) Date de publication de la demande: **05.08.2026**
(21) Numéro de dépôt: 26154011.6
(22) Date de dépôt: 26.01.2026
(51) Int. Cl.: B64D 33/02, F02C 7/042, F02C 7/045, F01D 25/04

(54) **ENSEMBLE DE PROPULSION D' AÉRONEF COMPRENANT AU MOINS UN ÉLÉMENT EN MATÉRIAU À MÉMOIRE DE FORME POUR RÉFLÉCHIR AU MOINS UNE PREMIÈRE ONDE**

(30) Priorité: 29.01.2025 FR 2500937
(71) Demandeur: AIRBUS OPERATIONS (S.A.S.), 31060 Toulouse (FR); Institut Supérieur de l'Aéronautique et de l'Espace, 31400 Toulouse (FR)
(72) Inventeur: BIANCHI, Stefano, 31060 TOULOUSE (FR); GOWREE, Erwin Ricky, 31055 TOULOUSE Cedex 4 (FR)
(74) Mandataire: Fantin, Laurent

(57) **Abrégé**

L'invention a pour objet un ensemble de propulsion d'aéronef comportant au moins un élément en matériau à mémoire de forme (66) positionné au niveau d'une surface aérodynamique (S50, S52) de l'ensemble de propulsion, cet élément en matériau à mémoire de forme (66) présentant une première géométrie lorsqu'il n'est pas soumis à une première onde (64) et une deuxième géométrie lorsqu'il est soumis à la première onde (64), la deuxième géométrie de l'élément en matériau à mémoire de forme (66) étant configurée pour réfléchir la première onde (64) en au moins une deuxième onde (68) qui se propage essentiellement en sens opposé de la première onde (64), déphasée par rapport à la première onde (64).

## Description

La présente demande se rapporte à un ensemble de propulsion d'aéronef comprenant au moins un élément en matériau à mémoire de forme pour réfléchir au moins une première onde.

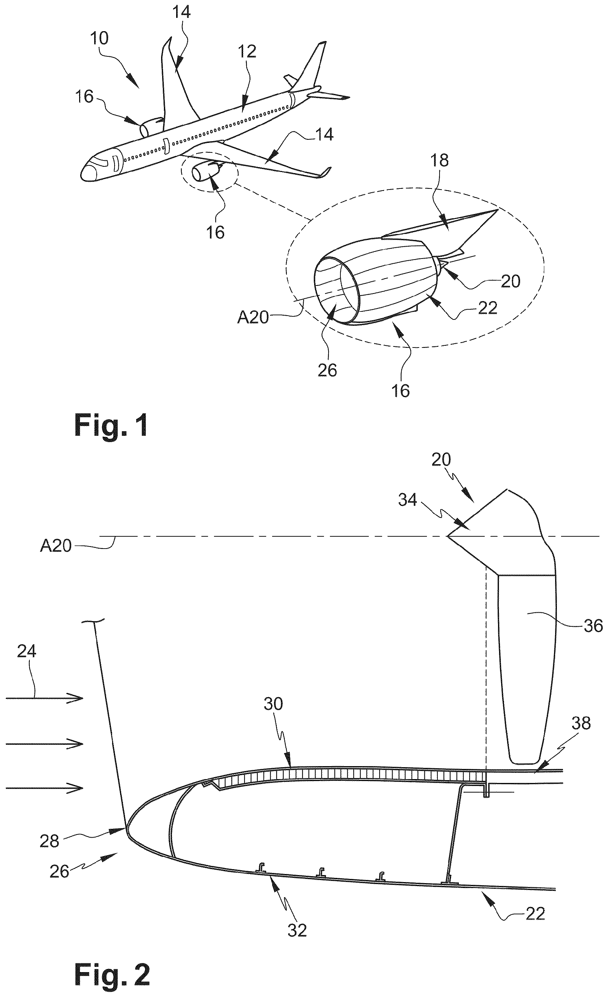

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières par des mâts 18. Chaque ensemble de propulsion 16 comprend une motorisation 20 ainsi qu'une nacelle 22 positionnée autour de la motorisation 20. Cette dernière présente un axe de motorisation A20.

Pour la suite de la description, une direction longitudinale est parallèle à l'axe de motorisation A20 et une direction radiale est perpendiculaire à l'axe de motorisation A20. Un plan longitudinal est un plan contenant l'axe de motorisation A20. Les notions avant/arrière font référence au sens d'écoulement d'un flux d'air 24, qui s'écoule de l'avant vers l'arrière dans la nacelle 22.

Selon un mode de réalisation visible sur la figure 2, la nacelle 22 a une forme approximativement tubulaire et délimite avec la motorisation 20 un conduit annulaire. Cette nacelle 22 comprend à l'avant une entrée d'air 26 via laquelle pénètre le flux d'air 24. Cette entrée d'air 26 comporte une lèvre 28, un premier conduit 30 prolongeant la lèvre 28 vers l'intérieur de la nacelle 22 en direction de la motorisation 20 ainsi qu'une paroi extérieure 32 prolongeant la lèvre 28 vers l'extérieur de la nacelle 22.

La motorisation 20 comprend une soufflante 34 qui comporte un rotor 36 ainsi qu'un deuxième conduit 38 appelé carter de soufflante et positionné autour du rotor 36, dans le prolongement du premier conduit 30.

En fonctionnement, la soufflante 34 génère des vibrations qui se propagent vers l'avant de l'entrée d'air 26 sous la forme d'au moins une première onde acoustique. Cette première onde acoustique est réfléchie au niveau de la lèvre 28 sous la forme d'une deuxième onde acoustique qui se propage vers l'arrière de l'entrée d'air 26, en direction de la soufflante 34. Cette deuxième onde acoustique peut interagir avec la première onde acoustique et ces première et deuxième ondes acoustiques peuvent accumuler de l'énergie produisant un effet de résonance sur les pales du rotor de la soufflante 34, ce qui peut entraîner une défaillance mécanique.

La présente invention vise à remédier à tout ou partie des inconvénients de l'art antérieur. A cet effet, l'invention a pour objet un ensemble de propulsion d'aéronef comportant une motorisation capable de générer au moins une première onde ainsi qu'au moins une surface aérodynamique sur laquelle se propage ladite première onde.

Selon l'invention, l'ensemble de propulsion comprend au moins un élément en matériau à mémoire de forme positionné au niveau de la surface aérodynamique, cet élément en matériau à mémoire de forme présentant une première géométrie lorsque l'élément en matériau à mémoire de forme n'est pas soumis à la première onde et une deuxième géométrie lorsque l'élément en matériau à mémoire de forme est soumis à la première onde, la deuxième géométrie de l'élément en matériau à mémoire de forme étant configurée pour réfléchir la première onde en au moins une deuxième onde qui se propage approximativement en sens opposé de la première onde, déphasée par rapport à la première onde.

Le déphasage des première et deuxième ondes permet de limiter ou d'empêcher un phénomène de résonance.

Selon une autre caractéristique, la deuxième géométrie de l'élément en matériau à mémoire de forme est configurée pour que les première et deuxième ondes soient en opposition de phase.

Selon une autre caractéristique, l'ensemble de propulsion comprend une entrée d'air qui comporte une lèvre, un premier conduit prolongeant la lèvre en direction de la motorisation ainsi qu'une zone de jonction reliant la lèvre et le premier conduit. En complément, ledit au moins un élément en matériau à mémoire de forme est situé au niveau ou à proximité de la zone de jonction.

Selon une autre caractéristique, ledit au moins un élément en matériau à mémoire de forme présente une surface aérodynamique orientée vers l'axe de motorisation et espacée de la surface aérodynamique de l'ensemble de propulsion en direction de l'axe de motorisation d'une distance inférieure à 5 mm.

Selon une autre caractéristique, ledit au moins un élément en matériau à mémoire de forme est une bande de matière de faible épaisseur.

Selon une autre caractéristique, l'ensemble de propulsion comporte une entrée d'air qui présente une circonférence. En complément, la bande de matière formant l'élément en matériau à mémoire de forme s'étend sur au moins une partie de la circonférence de l'entrée d'air.

Selon une autre caractéristique, la bande de matière formant l'élément en matériau à mémoire de forme s'étend sur toute la circonférence de l'entrée d'air.

Selon une autre caractéristique, l'ensemble de propulsion comprend une entrée d'air qui présente une circonférence ainsi que plusieurs éléments en matériau à mémoire de forme répartis sur la surface aérodynamique de l'entrée d'air.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe longitudinale d'une partie avant d'un ensemble de propulsion illustrant un mode de réalisation de l'art antérieur,
- La figure 3 est une coupe longitudinale d'une partie avant d'un ensemble de propulsion illustrant un mode de réalisation de l'invention.

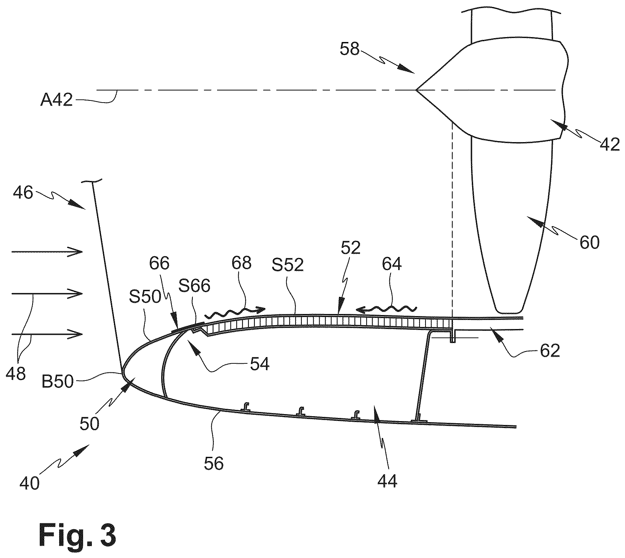

Selon un mode de réalisation visible sur la figure 3, un ensemble de propulsion 40 comprend une motorisation 42 présentant un axe de motorisation A42 ainsi qu'une nacelle 44 positionnée autour de la motorisation 42.

La nacelle 44 comprend, à l'avant, une entrée d'air 46 via laquelle pénètre un flux d'air 48. Cette entrée d'air 46 comporte une lèvre 50, un premier conduit 52 prolongeant la lèvre 50 vers l'intérieur de la nacelle 44 en direction de la motorisation 42, une zone de jonction 54 reliant la lèvre 50 et le premier conduit 52 ainsi qu'une paroi extérieure 56 prolongeant la lèvre 50 vers l'extérieur de la nacelle 44. La lèvre 50 présente un bord d'attaque B50 au niveau duquel un flux d'air se sépare en un premier flux d'air pénétrant dans la nacelle 44 et un deuxième flux d'air s'écoulant à l'extérieur de la nacelle 44.

La motorisation 42 comprend une soufflante 58 qui comporte un rotor 60 pourvu de pales ainsi qu'un deuxième conduit 62, appelé carter de soufflante, positionné autour du rotor 60, dans le prolongement du premier conduit 52.

La motorisation 42 n'est pas plus décrite car elle peut être identique à celle de l'art antérieur. A l'exception de la lèvre 50 et du premier conduit 52, la nacelle 44 n'est pas plus décrite car elle peut être identique à celle de l'art antérieur.

La lèvre 50 et le premier conduit 52 comprennent des parois aérodynamiques qui présentent respectivement des première et deuxième surfaces aérodynamiques S50, S52 canalisant le flux d'air 48 qui pénètre dans la nacelle 44 et contre lesquelles s'écoule ce flux d'air 48.

En fonctionnement, la soufflante 58 peut générer des vibrations qui se propagent, au niveau ou à proximité des première et deuxième surfaces aérodynamiques S50, S52, vers l'avant de l'entrée d'air 46 sous la forme d'au moins une première onde acoustique 64.

Selon une particularité, l'entrée d'air 46 comprend au moins un élément en matériau à mémoire de forme 66 positionné au niveau d'au moins une surface aérodynamique de l'entrée d'air 46 parmi les première et deuxième surfaces aérodynamiques S50, S52 de la lèvre 50 et du premier conduit 52. Ledit au moins un élément en matériau à mémoire de forme 66 présente une première géométrie lorsqu'il n'est pas soumis à la première onde acoustique 64 et une deuxième géométrie lorsqu'il est soumis à la première onde acoustique 64.

La matière et/ou la première géométrie de l'élément en matériau à mémoire de forme 66 est (sont) déterminée(s) de manière à favoriser la stimulation de l'élément en matériau à mémoire de forme 66 par la première onde 64 afin de provoquer un changement de géométrie de l'élément en matériau à mémoire de forme 66, qui passe de la première géométrie à la deuxième géométrie.

Selon un mode de réalisation, ledit au moins un élément en matériau à mémoire de forme 66 présente une troisième surface aérodynamique S66 orientée vers l'axe de motorisation A42 et espacée de la première ou deuxième surface aérodynamique S50, S52 en direction de l'axe de motorisation A42 d'une distance inférieure à 5 mm. Selon un agencement, la troisième surface aérodynamique S66 affleure au moins l'une des première et deuxième surfaces aérodynamiques S50, S52 de la lèvre 50 et du premier conduit 52.

Selon un mode de réalisation, ledit au moins un élément en matériau à mémoire de forme 66 est intégré dans au moins une paroi aérodynamique de la lèvre 50 et du premier conduit 52 qui présente la première ou deuxième surface aérodynamique S50, S52. Lorsque le premier conduit 52 ou la lèvre 50 comprend un panneau d'atténuation acoustique, l'élément en matériau à mémoire de forme 66 est intégré dans la couche acoustiquement résistive (perméable aux ondes) du panneau d'atténuation acoustique.

Selon une configuration, ledit au moins un élément en matériau à mémoire de forme 66 est une bande de matière de faible épaisseur, inférieure à 10 mm.

Selon un mode de réalisation, l'élément en matériau à mémoire de forme 66 présente une largeur (dimension prise parallèlement à l'axe de motorisation A42) comprise entre 5 et 20 cm.

Selon une configuration, la bande de matière formant l'élément en matériau à mémoire de forme 66 s'étend sur au moins une partie de la circonférence de l'entrée d'air 46. Selon un agencement, l'élément en matériau à mémoire de forme 66 s'étend sur au moins la moitié de la circonférence de l'entrée d'air 46 et de préférence sur toute la circonférence de l'entrée d'air 46.

Selon une autre configuration, l'entrée d'air 46 comprend plusieurs éléments en matériau à mémoire de forme 66 répartis sur au moins l'une des première et deuxième surfaces aérodynamiques S50, S52, notamment sur la circonférence de l'entrée d'air 46.

Selon un mode de réalisation, ledit au moins un élément en matériau à mémoire de forme 66 est situé au niveau ou à proximité de la zone de jonction 54 reliant la lèvre 50 et le premier conduit 52, plus particulièrement à cheval sur la lèvre 50 et le premier conduit 52.

La première géométrie de l'élément en matériau à mémoire de forme 66 est déterminée de manière à limiter les perturbations aérodynamiques.

La deuxième géométrie de l'élément en matériau à mémoire de forme 66 est déterminée de manière à ce que ce dernier réfléchisse la première onde acoustique 64 en au moins une deuxième onde acoustique 68 qui se propage approximativement en sens opposé de la première onde acoustique 64, en direction de la soufflante 58, déphasée par rapport à la première onde acoustique 64. Selon une configuration, la deuxième géométrie de l'élément en matériau à mémoire de forme 66 est configurée pour que les première et deuxième ondes acoustiques 64, 68 soient en opposition de phase et qu'une amplitude maximale de la première onde acoustique 64 corresponde une amplitude minimale de la deuxième onde acoustique 68.

Bien entendu, l'invention n'est pas limitée aux ondes acoustiques et peut s'appliquer à tout type d'onde.

Le déphasage des première et deuxième ondes 64, 68 permet de limiter ou d'empêcher un phénomène de résonance sur les pales du rotor 60 de la soufflante 58, limitant les risques de défaillances mécaniques.

Quel que soit le mode de réalisation, l'élément en matériau à mémoire de forme 66 permet d'obtenir un système passif configuré pour limiter ou empêcher les phénomènes de résonance.

Bien que décrite appliquée à une entrée d'air, l'invention n'est pas limitée à cette application. Ainsi, l'invention peut s'appliquer à tout ensemble de propulsion d'aéronef qui comprend au moins une motorisation 42 capable de générer au moins une première onde 64 ainsi qu'au moins une surface aérodynamique S50, S52 sur laquelle se propage ladite première onde 64.

## Revendications

1. Ensemble de propulsion d'aéronef comportant une motorisation (42) capable de générer au moins une première onde (64) ainsi qu'au moins une surface aérodynamique (S50, S52) sur laquelle se propage ladite première onde (64), **caractérisé en ce que** l'ensemble de propulsion comprend au moins un élément en matériau à mémoire de forme (66) positionné au niveau de la surface aérodynamique (S50, S52), cet élément en matériau à mémoire de forme (66) présentant une première géométrie lorsque l'élément en matériau à mémoire de forme (66) n'est pas soumis à la première onde (64) et une deuxième géométrie lorsque l'élément en matériau à mémoire de forme (66) est soumis à la première onde (64), la deuxième géométrie de l'élément en matériau à mémoire de forme (66) étant configurée pour réfléchir la première onde (64) en au moins une deuxième onde (68) qui se propage approximativement en sens opposé de la première onde (64), déphasée par rapport à la première onde (64).

2. Ensemble de propulsion selon la revendication précédente, **caractérisé en ce que** la deuxième géométrie de l'élément en matériau à mémoire de forme (66) est configurée pour que les première et deuxième ondes (64, 68) soient en opposition de phase.

3. Ensemble de propulsion selon l'une des revendications précédentes, **caractérisé en ce que** l'ensemble de propulsion comprend une entrée d'air (46) qui comporte une lèvre (50), un premier conduit (52) prolongeant la lèvre (50) vers l'intérieur de la nacelle (44) en direction de la motorisation (42) ainsi qu'une zone de jonction (54) reliant la lèvre (50) et le premier conduit (52) et **en ce que** ledit au moins un élément en matériau à mémoire de forme (66) est situé au niveau ou à proximité de la zone de jonction (54).

4. Ensemble de propulsion selon l'une des revendications précédentes, **caractérisé en ce que** ledit au moins un élément en matériau à mémoire de forme (66) présente une surface aérodynamique (S66) orientée vers l'axe de motorisation (A42) et espacée de la surface aérodynamique (S50, S52) de l'ensemble de propulsion en direction de l'axe de motorisation (A42) d'une distance inférieure à 5 mm.

5. Ensemble de propulsion selon l'une des revendications précédentes, **caractérisé en ce que** ledit au moins un élément en matériau à mémoire de forme (66) est une bande de matière de faible épaisseur.

6. Ensemble de propulsion selon l'une des revendications, **caractérisé en ce que** l'ensemble de propulsion comporte une entrée d'air (46) qui présente une circonférence et **en ce que** la bande de matière formant l'élément en matériau à mémoire de forme (66) s'étend sur au moins une partie de la circonférence de l'entrée d'air (46).

7. Ensemble de propulsion selon la revendication précédente, **caractérisé en ce que** la bande de matière formant l'élément en matériau à mémoire de forme (66) s'étend sur toute la circonférence de l'entrée d'air (46).

8. Ensemble de propulsion selon l'une des revendications 1 à 5, **caractérisé en ce que** l'ensemble de propulsion comporte une entrée d'air (46) qui présente une circonférence et plusieurs éléments en matériau à mémoire de forme (66) répartis sur la surface aérodynamique (S50, S52) de l'entrée d'air (46).

9. Aéronef comprenant au moins un ensemble de propulsion selon l'une des revendications précédentes.
